# EUROPEAN PATENT APPLICATION

(11) **EP 0 988 927 A2**
(43) Date of publication of application: **29.03.2000**
(21) Application number: 99114767.9
(22) Date of filing: 28.07.1999
(51) Int. Cl.: B23Q 11/10

(54) **A method of machining a workpiece and apparatus for supplying mist used therein**

(30) Priority: 08.09.1998 JP 25440098; 16.03.1999 EP 99105388
(71) Applicant: ECOREG LTD., Osaka-shi, Osaka 531-0072 (JP)
(72) Inventor: Mitsugu, Hara, Kishiwada-shi, Osaka 596-0827 (JP)
(74) Representative: Frankland, Nigel Howard

(57) **Abstract**

When machining a workpiece with a machining part, a plurality of liquids are separately introduced into ejection means which converts each liquid into a mist form which is directed toward the workpiece and the machining part. The liquids, which may be water and oil, are not mixed one another within the ejection means, and are converted into a mist form after being separately ejected from the ejection means. The liquids are supplied to separate ejection apertures within ejection nozzle means. Compressed air is directed toward each ejection aperture and collides with the ejected lequids to create the mist. With this method and apparatus, the quality of the liquids may not deteriorate, and a cooling effect and lubricity are provided at the same time. The pressure of compressed air, water and oil can be separately regulated.

## Description

The present invention relates generally to a method of machining a workpiece such as machine cutting and grinding and an apparatus for supplying mist which may be used in the method.

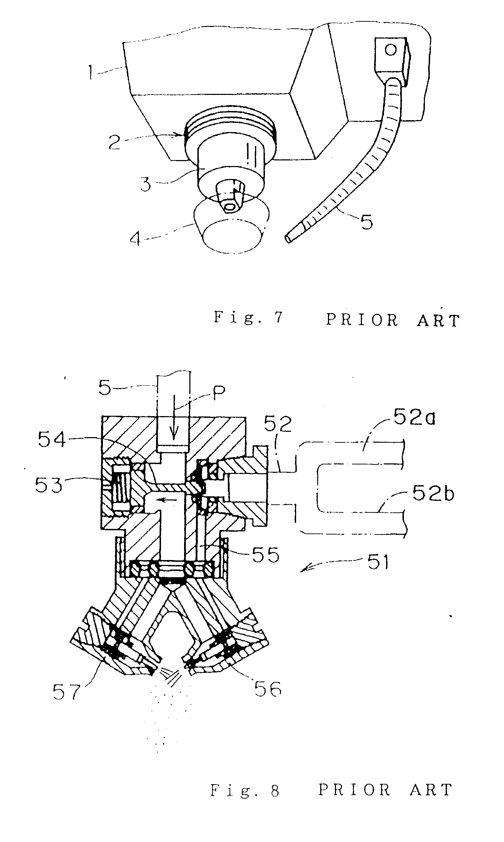

To dissipate heat generated by contact between a workpiece and a machine tool during machine cutting or grinding, conventionally a liquid is delivered from a water-supply nozzle extending toward the machining position. For example, in a machining center (a complex machine tool) as shown in Fig. 7, a tool holder 2, which is installed on the lower end of a spindle (not shown) of a body 1 and a tool connecting axis 3, is to be engaged with a machining tool 4, to which a water supply nozzle or an air supply tube 5 extends from the body 1. However, in machining using a large-scale stand type machine tool like this machining center, there may be a situation where machining performance deteriorates because water or debris easily accumulates inside a machined recess. In addition, when machining by intermittently contacting a carbide machining tool with a workpiece, the temperature rises on the machining point of the cutting edge due to generated heat while the cutting edge simultaneously is being cooled by the liquid delivery. Thus, repeated sudden thermal changes may cause the so called "chipping" phenomena or cracks.

For this reason, liquid is sprayed in a mist toward a workpiece and a machining tool, instead of being delivered as a liquid, so as to impart lubricity. According to this method, the inconvenience of water accumulation within the recess may be avoided or the chipping phenomena by sudden cooling may not be caused. However, this method has problems in that lubricity is not sufficient when using water as the liquid for the mist, and in that the cooling effect is not sufficient when using oil as the liquid for the mist. For example, an oil feeder and an oil feeding method for supplying the oil in a mist form are proposed by Japanese Provisional Publication TOKKAIHEI 9-141537.

Therefore, as a method to realize cooling effect and lubricity by ejecting liquid in a mist form for machining a workpiece has been proposed by Japanese Provisional Publication TOKKAIHEI 6-320384. According to this method, instead of only one kind of a liquid being ejected in a mist form, two or more kinds of liquids are mixed and ejected in a mist form. An ejection nozzle 51 as shown in Fig. 8 is connected to an end of an air supply tube 5 as shown in Fig. 7. In nozzle 51 two branch liquid supply tubes 52a, 52b are branched away from a liquid supply tube 52 connected to one side (the right side in Fig. 8) of the ejection nozzle 51. The branch tube 52a supplies water while the other branch tube 52b supplies oil. When compressed air is supplied from the air supply tube 5, as shown by an arrow P in Fig. 8, a piston 54 held by a compression spring 53 is pushed toward the opposite side (left side in Fig.8) in the nozzle 51 so that a liquid passage 55 connected to the liquid supply tube 52 is opened. Consequently, water and oil are sprayed out in mixed fine particles from the very small outlets of nozzles 56 and 57 which are branched off toward the right and left, respectively.

In machining a workpiece in this machining center, when compressed air is supplied to the air supply tube 5 and also water and oil are supplied to the liquid supply tube 52, a liquid mixture of water and oil is ejected from the ejection nozzle 51. The water and oil, which coexist in fine particles, collide with a surface of a workpiece to be machined as well as with a surface of a machining tool to be pressed on the workpiece. The oil particles mainly increase lubricity while water mainly dissipates the heat produced during machining.

However, according to the above method, in mixing the oil and water, the quality of thus obtained liquid mixture may deteriorate, resulting in insufficient lubricity. Further, it is difficult to mix water and oil, resulting in insufficient mixing in the mixture liquid. As a result, it is difficult to impart both the cooling effect and lubricity at the same time between the surface of the workpiece and the surface of the machining tool.

Still further, since the water and oil are ejected together into the nozzle with the ejection of compressed air, it is not possible to separately regulate the ejection pressures of each of the compressed air, water and oil.

In view of the foregoing, it is an object of the present invention to provide a method for machining workpieces and an apparatus for supplying mist used therein, whereby quality of the liquids may not deteriorate, a cooling effect and lubricity are rendered at the same time between the workpiece to be machined and the machining part, and the ejecting pressure of each of the compressed air, water and oil can be separately regulated.

In accordance with a first aspect of the present invention, there is provided a method of machining a workpiece with a machining part, comprising the steps of introducing a plurality of liquids separately into ejection means which converts each liquid into a mist form and ejecting the liquids toward a workpiece to be machined and a machining part; wherein the liquids are not mixed one another within the ejection means, the liquids each being separately converted into a mist form after being ejected from the ejection means, and machining the workpiece as the liquids, in a mist form, are supplied toward the workpiece to be machined and the machining part.

In accordance with a second aspect of the present invention, there is provided an apparatus for supplying mist to a machine for machining a workpiece, the apparatus comprising ejection means for ejecting a plurality of liquids separately without mixing the liquids with one another and means for converting the liquids ejected from the ejection means into a mist form.

In the method for machining a workpiece of the present invention, since the plurality of liquids separately introduced into the ejection means are ejected from the ejection nozzle separately without being mixed within the ejection means, in case that the liquids are mixed, time necessary for mixing liquids with each other is short, resulting in substantially no deterioration in quality of each liquid. Further, even in the case that the liquids are mixed, since the liquids are mixed after being made into a mist form, each liquid is sufficiently mixed, resulting in providing both a cooling effect and lubricity on each of the workpiece to be machined and the machining part. Still further, it is convenient because each ejection pressure can be separately regulated.

The method of machining a workpiece of the present invention can be carried out by introducing a plurality of liquids into the ejection means.

Still further, in case that the ejection nozzle means has a single ejection nozzle and a plurality of liquids are introduced into the single ejection nozzle, since the liquids are ejected from the single ejection nozzle, it becomes easier to mix each ejected liquid.

Even still further, in case that the ejection means has a plurality of ejection nozzles and a plurality of liquids are separately introduced into each of the corresponding ejection nozzles, respectively, since the liquids are ejected from the plurality of ejection nozzles, respectively, it becomes easier to supply the liquids into different parts, separately. However, in this case, the liquids ejected from a plurality of ejection nozzles may be mixed.

In the method of machining workpieces according to the present invention, in the case that cooling water is ejected from one of the ejection nozzles and made in a mist form and is supplied to a face side of a tool while a cutting fluid is ejected from another nozzle and made in a mist form and is supplied to a flank side of the tool, the face side of the machining tool can be cooled by the mist of the cooling water, while the flank side of the machining tool can be lubricated by the mist of the oil cutting fluid. In the present invention, "a face side of a machining tool" means not only a face side of a machining tool and its adjacent portion, but also cuttings for a workpiece, or all together of the face side, its adjacent portion and cutting. In addition, in the present invention, "a flank side of a machining tool" means not only a flank side of a machining tool and its adjacent portion, but also a machined surface of a workpiece, or all together of the flank side, its adjacent portion and the machined surface of a workpiece.

In a preferred method of machining a workpiece of the present invention, compressed air is ejected from an air outlet of an each ejection nozzle toward at least one ejection aperture of the ejection nozzle through which a liquid is ejected so that a flow of compressed air collides with the ejected liquid, which is to convert the liquid into a mist form. Since the compressed air is ejected from the air outlet of the ejection nozzle and then moved toward the liquids ejected from the ejection apertures of the ejection nozzle, such movement entrains the adjacent air to flow in a corresponding manner so that the amount of air to be collided with the liquids can be increased.

In order that the invention may be more readily understood and so that further features thereof may be appreciated, the invention will be described by way of example with reference to the accompanying drawings which:
Fig. 1 is a sectional view illustrating a machining center according to one embodiment of the present invention;
Fig. 2 is a sectional view of a nozzle body used in an apparatus for supplying mist according to the present invention;
Fig. 3 is a front view of the nozzle body of Fig. 2;
Fig. 4 is a sectional view of the essential part of the nozzle body of Fig. 2;
Fig. 5 is a sectional view illustrating the construction of a machining center according to another embodiment of the present invention;
Fig. 6 is a sectional view illustrating the essential portion of an air supply tube used in the apparatus for supplying mist according to the present invention;
Fig. 7 is a perspective view illustrating a method of water delivery in a conventional work machining method; and
Fig. 8 is a sectional view illustrating a conventional nozzle for ejecting mist.

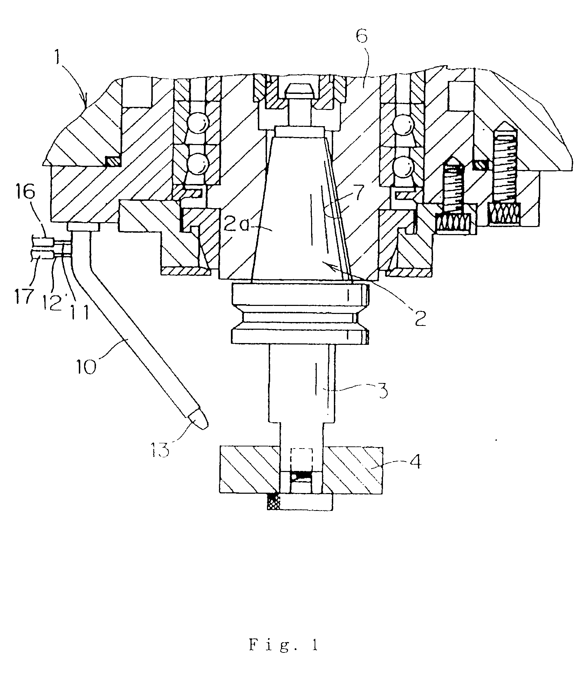

Fig. 1 is a diagram illustrating a machining center 1 according to one embodiment of the present invention. The basic construction of this machining center 1 is the same as that of conventional one. That is, a spindle 6, which rotates at a high-speed, is held via a bearing inside the machining center 1. A tapered chuck 7 is provided at a lower end of the spindle 6. A taper 2a for engagement in a tool holder 2 is inserted and held detachably in the tapered chuck 7. A machining tool 4 is installed on a tool connecting axis 3 which is a lower part of the tool holder 2.

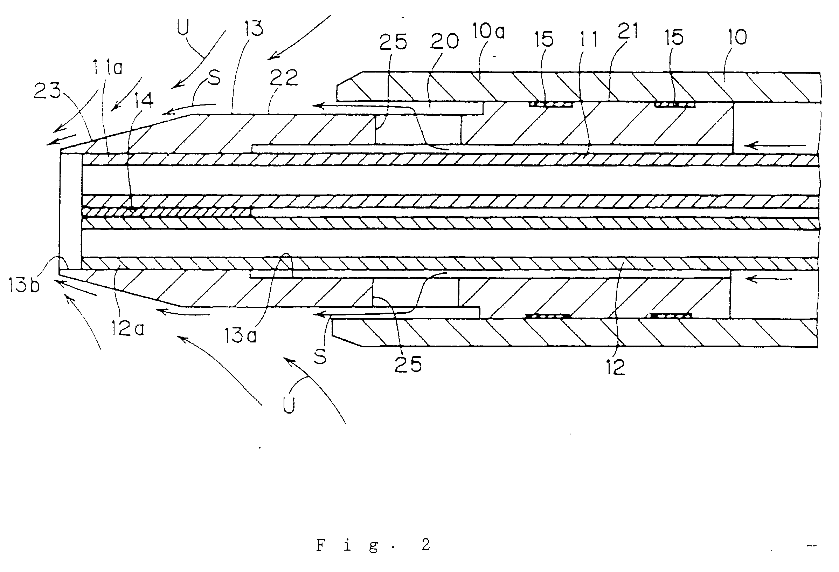

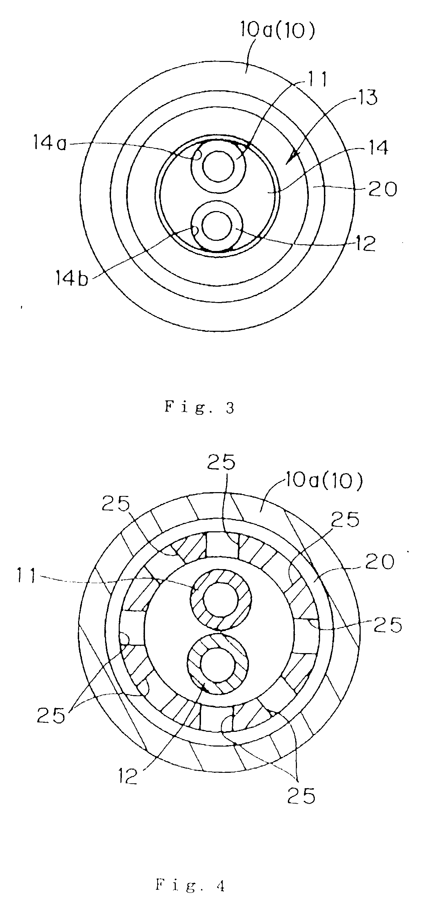

An apparatus for supplying mist is installed on the lower end of the machining center 1. The apparatus for supplying mist comprises an air supply tube 10, which extends perpendicularly a short distance from the machining center 1 and then extends so as to be tilted inwards; a cooling water supply tube 11, a portion of which is located inside the air supply tube 10 as shown in Fig. 2; an oil cutting fluid supply tube 12, also located inside the same air supply tube 10 as shown in Fig. 2; and a generally-cylindrical nozzle body (an ejection nozzle) 13; wherein one side of the nozzle body 13 (right side in Fig. 2) is engaged within an open end 10a of the air supply tube 10, while the other end (left side in Fig. 2) projects from the open end 10a. Both ends of the cooling water supply tube 11 and the oil cutting fluid supply tube 12 are inserted into an inner hole 13a of the nozzle body 13. In addition, as shown in Fig. 3, a holding plate 14 is fixed in an air-tight state at an open end 13b of the nozzle body 13, such that each open end 11a, 12a of the cooling water supply tube 11 and the oil cutting fluid supply tube 12 is held and fixed in an air-tight state to a pair of through holes 14a, 14b, respectively, arranged in the holding plate 14. In Fig. 2, 15 is a sealer.

The upper open of the air supply tube 10 is connected to an air supply means such as a compressor (not shown) via air supply line located inside the machining center 1. Ends of the cooling water supply tube 11 and the oil cutting fluid supply tube 12 respectively project from the upper part of the air supply tube 10 (see Fig. 1) and are connected via a cooling water connecting tube 16 and an oil cutting fluid connecting tube 17, respectively, with cooling water supply means (not shown), such as a cooling water tank of, for example, tap water, a pump and the like, and oil cutting fluid supply means (not shown), such as an oil cutting fluid tank, a pump and the like. The tank may contain an oil cutting fluid such as Bluebe #LB-1 available from US ITW Corporation. In addition, respective pressure regulating valves (not shown) are provided in the air supply tube 10, the air supply line or the air supply means, in the cooling water supply tube 11, the cooling water connecting tube 16 or the cooling water supply means, and in the oil cutting fluid supply tube 12, the oil cutting fluid connecting tube 17 or the oil cutting fluid supply means. The pressure regulating valves are provided so that compressed air, cooling water and oil cutting fluid, at a specified set pressure respectively, are supplied to the air supply tube 10, the cooling water supply tube 11 and the oil cutting fluid supply tube 12.

On the outer periphery of the nozzle body 13, in order from the right hand side thereof as shown in Fig. 2, are a larger-diameter peripheral surface 21 engaged with an inner peripheral surface of the open end 10a of the air supply tube 10, a smaller-diameter peripheral surface 22 formed so as to be stepped down from the larger-diameter peripheral surface 21 (i.e., formed so as to have a smaller diameter than the open end 10a of the air supply tube 10), and a tapered surface part 23 wherein the size of the tapered part gradually becomes smaller in diameter from the small-diameter peripheral surface 22 toward a distal end so as to be shaped into a frustum of a right circular cone, the right side portion of the small-diameter peripheral surface 22 being positioned within the open end 10a of the air supply tube 10. Consequently, an annular gap 20 is formed between the open end 10a of the air supply tube 10 and the right side portion of the small-diameter peripheral surface 22.

The inner bore 13a of the nozzle body 13, except for an open end 13b, is formed to define sufficient space for the cooling water supply tube 11 and the oil cutting supply tube 12. Except for the open end 13b, eight air circulation holes (air outlets) 25 are formed radially and equidistantly at positions corresponding to the right side portion of the smaller-diameter peripheral surface 22.

In use of the above construction, when air is supplied to the air supply tube 10, cooling water is supplied to the cooling water supply, tube 11 and oil cutting fluid is supplied to the oil cutting fluid tube 12, cooling water is ejected from the open end 11a of the cooling water supply tube 11 and oil cutting fluid is ejected from the open end 12a of the oil cutting fluid supply tube 12, respectively. At the same time, air supplied to the air supply tube 10 flows into the inner bore 13a of the nozzle body 13, then into the gap 20 via each of the air circulation holes 25, and subsequently along the smaller-diameter peripheral surface 22 and the tapered surface part 23 (as shown by an arrow S), and finally collides with cooling water ejected from the open end 11a of the cooling water supply tube 11 and with oil cutting fluid ejected from the open end 12a of the oil cutting fluid supply tube 12. Consequently, the cooling water and the oil cutting fluid become fine particles and are formed into a mist, thereby resulting in mist mixture. On the other hand, when compressed air flows along the smaller-diameter peripheral surface 22 and the tapered surface part 23 of the nozzle body 13, the compressed air creates a flow of adjacent air so as to form a subsidiary flow as shown by an arrow U. For this reason, the subsidiary flow increases the mist mixture to a large amount of flow. In addition, the flow of the increased mist mixture has a strong thrust and strongly collides with the machined part of a workpiece and with the machining part of the machining tool 4 to be pressed on the workpiece.

As described in the above embodiment, since the cooling water and the oil cutting fluid are first formed into the form of a mist and then mixed together, both are fully mixed together. Further, since the cooling water and the oil cutting fluid are not mixed within the nozzle body 13, the fact that the oil cutting fluid is only admixed with the water immediately before the mixture is applied to the workpiece and the machining part can prevent the oil cutting fluid from deteriorating before it is used. Still further, the mist mixture has sufficient power to blow off debris and the like generated during machining, thereby preventing debris and the like from remaining around the workpiece to be machined and the machining part. In addition, since a large amount of flow of the mist mixture is applied, enhancement of the cooling effect results. Even still further, since the ejected mist mixture properly moistens the machined workpiece and the machining tool 4 so as to increase lubricity, good processability results. Therefore, the burden of the machining tool 4 is decreased and also sudden cooling such as caused by the delivery of liquid may not be incurred thereon so that intermittent thermal impact may not result, resulting in prolonged service life of the machining tool. In addition, there is an advantage that the ejection pressure of each of the compressed air, the cooling water and the oil cutting fluid can be changed depending on the desired machining conditions.

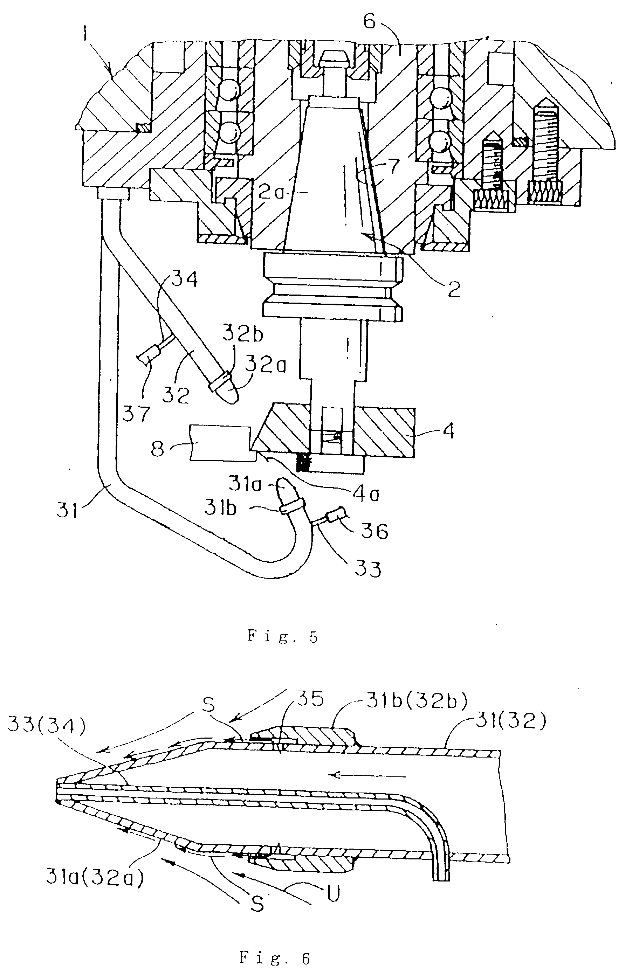

Fig. 5 illustrates a machining center according to another embodiment of the present invention. The basic construction of the machining center is the same as the embodiment shown in Fig. 1. In Fig. 5, the same components as shown in Fig. 1 are denoted by the same reference numerals. In the figure, 4a is debris and 8 is a workpiece.

According to this embodiment, in an apparatus for supplying mist, a first and a second air supply tubes 31 and 32 extends downward, respectively, from a lower end of a machining center body 1. A cooling water supply tube 33 is located inside the first air supply tube 31 while an oil cutting fluid tube 34 is located inside the second air supply tube 32, both in the manner shown in Fig. 6. An open end of the cooling water supply tube 33 is fixed in an air-tight state to an ejection nozzle 31a of the first air supply tube 31, while an open end of the oil cutting fluid supply tube 34 is fixed in an air-tight state to ejection nozzle 32a of the second supply tube 32. The ejection nozzle 31a of the first air supply tube 31 is directed toward a face side of the machining tool 4, while the ejection nozzle 32a of the second air supply tube 32 is directed toward a flank side thereof. In Fig. 5, 36 and 37, respectively, are connecting tubes for the cooling water supply tube 33 and for the oil cutting fluid supply tube 34.

In addition, guide rings 31b, 32b externally engage with each peripheral surface of the air supply tubes 31, 32, respectively, whereby air is ejected as shown by an arrow S in Fig. 6 from a gap 35 between each outer peripheral surface of the air supply tubes 31, 32 and each inner peripheral surface of the guide rings 31b, 32b, respectively, so as to cause adjacent air to flow in a subsidiary flow as shown by an arrow U.

In the above construction, when compressed air is supplied to the air supply tubes 31 and 32, cooling water is supplied to the cooling water supply tube 33 and oil cutting fluid is supplied to the oil cutting fluid tube 34, cooling water is supplied in a mist form from the ejection nozzle 31a of the first air supply tube 31 to a face side of the machining tool 4, and oil cutting fluid is supplied in a mist form from the ejection nozzle 32a of the second air supply tube 32 to a flank side of the machining tool 4. In addition, when the compressed air supplied to air supply tubes 31 and 32 flows along the outer peripheral surface of the ejection nozzles 31a and 32a, it creates a subsidiary flow of air. For this reason, a mist which is superior in cooling effect and which can also eliminate debris is supplied.

As mentioned above, the same action and effect in this embodiment can be obtained as in the first embodiment. Further, since cooling water is supplied in a mist form to a face side of the machining tool 4, while the oil cutting fluid is supplied in a mist form to a flank side of the machining tool 4, a superior cooling effect and lubricity can be obtained.

Since the cooling effect and lubricity vary greatly depending upon the type of mist generated, it is preferred that the amount of each the cooling water supplied to the cooling water supply tubes 11, 33 and the oil cutting fluid supplied to supply tubes 12, 34 are regulated so as to adjust the mixing ratio thereof. Additionally or alternatively, the ejection pressure of each of the compressed air, cooling water and oil cutting fluid ejected from the air supply tubes 10, 31 and 32, the cooling water supply tubes 11, 33 and the oil cutting fluid supply tubes 12, 34, respectively, maybe regulated. For example, in the case of high-speed cutting, the ratio of water between cooling water and oil cutting fluid may be increased so as to increase cooling effect, while in the case of medium- or low-speed cutting, the ratio of oil cutting fluid may be increased so as to increase lubricity.

In addition, in both of the above embodiments, the average particle diameter of the mist ejected from the cooling water supply tubes 11, 33 generally depends upon machining conditions. However, it is preferred to usually have the average particle diameter within a range of about 3 to 10 µm. It is preferred that the amount of the ejected mist therefrom is usually within a range of about 0.1 to 0.5cc/min.

In addition, in both of the above embodiments, tap water is used as the cooling water. However, such is not critical, and pure water or super pure water may be used. Further, in the above both embodiments, Bluebe #LB-1 is used as the oil cutting fluid. This fluid is not critical, and various conventional oil cutting fluids may be used. Still further, in the above both embodiments, two kinds of liquids, i.e., cooling water and oil cutting fluid are used. However, these are not critical, and an emulsion, a chemical agent, or the like may be used. Even still further, the number of liquids is not limited to two kinds as three or more liquids may be mixed and used.

In addition, the application of the apparatus of the present invention may not be limited to a machining center as described the above in connection with both embodiments. The apparatus maybe applicable to various machine tools such as NC lathes and grinders.

In both of the above embodiments, the compressed air supply line for supplying the compressed air to the air supply tubes 10, 31 and 32 is formed inside the machining center body 1. This arrangement is not critical, and the compressed air supply line may be located outside the machining center 1. In addition, the cooling water supply tubes 11, 33 and the oil cutting fluid supply tubes 12, 34 are described and shown as being located outside the machining center body 1. However, these tubes may be formed inside the machining center body 1.

## Claims

1. A method of machining a workpiece with a machining part, comprising the steps of introducing a plurality of liquids separately into ejection means which converts each liquid into a mist form and ejecting the liquids toward a workpiece to be machined and a machining part; wherein the liquids are not mixed one another within the ejection means, the liquids each being separately converted into a mist form after being ejected from the ejection means, and machining the workpiece as the liquids, in a mist form, are supplied toward the workpiece to be machined and the machining part.

2. A method according to claim 1 wherein the ejection means has a single ejection nozzle and the liquids are introduced into the single ejection nozzle.

3. A method according to claim 1 wherein the ejection means has a plurality of ejection nozzles and each of the liquids is introduced into a respective ejection nozzle.

4. A method according to claim 2 wherein the liquids are mixed in a mist form and then supplied toward the workpiece to be machined and the machining part.

5. A method according to claim 3 wherein cooling water is ejected from one of the ejection nozzles and converted into a mist form, and is supplied to a face side of a tool that constitutes the machining part, while a cutting fluid is ejected from another ejection nozzle and converted into a mist form, and is supplied to a flank side of the tool.

6. A method according to any one of claims 2 to 5 wherein compressed air is ejected from an air outlet of an each ejection nozzle toward at least one ejection aperture of the ejection nozzle through which a liquid is ejected so that a flow of compressed air collides with the ejected liquid, which is to convert the liquid into a mist form.

7. An apparatus for supplying mist to a machine for machining a workpiece, the apparatus comprising ejection means for ejecting a plurality of liquids separately without mixing the liquids with one another and means for converting the liquids ejected from the ejection means into a mist form.

8. An apparatus for supplying mist according to claim 7 comprising
ejection nozzle means,
air supply tube means for supplying compressed air to an air outlet of the ejection nozzle means,
a plurality of liquid supply tubes,
each of which supplies a respective liquid to an ejection aperture of the ejection nozzle means,
each liquid supply tube being mounted within the air supply tube means and an open end of the liquid supply tube being positioned at the ejection aperture of the ejection nozzle means,
the arrangement being such that compressed air is supplied to the air supply tube means, different respective liquids are supplied to the respective liquid supply tubes, the compressed air supplied to the air supply tube means is supplied to the air outlet of the ejection nozzle means and moves towards the ejection aperture of the ejection nozzle means so as to collide with the liquids ejected from the open end of the liquid supply tubes to create said mist.

9. An apparatus for supplying mist according to claim 8 wherein the ejection nozzle means comprises a single nozzle and wherein the open end of each liquid supply tube is located within a single ejection aperture defined by the ejection nozzle.

10. An apparatus for supplying mist according to claim 8 wherein the ejection nozzle means comprises a plurality of nozzles, each nozzle being associated with a single respective one of the liquid supply tubes.
